# EUROPEAN PATENT APPLICATION

(11) **EP 3 343 479 A1**
(43) Date of publication of application: **04.07.2018**
(21) Application number: 17207555.8
(22) Date of filing: 15.12.2017
(51) Int. Cl.: G06Q 10/06, H04S 7/00, H04N 21/414

(54) **PROCEDURE FOR THE MANAGEMENT OF AN EMISSION OF A SOUND FOR A VEHICLE**

(30) Priority: 29.12.2016 ES 201631704
(71) Applicant: Seat, S.A., 08760 Martorell - Barcelona (ES)
(72) Inventor: RODRÍGUEZ BOSCH, Rubén, 08760 MARTORELL (Barcelona) (ES); VÁZQUEZ IGLESIAS, Rodrigo, Germán, 08760 MARTORELL (Barcelona) (ES); REDONDO RUIZ, David, 08760 MARTORELL (Barcelona) (ES); GARCÍA PAMPLONA, José, Antonio, 08760 MARTORELL (Barcelona) (ES)
(74) Representative: Herrero & Asociados, S.L.

(57) **Abstract**

The procedure comprises the stages of establishing a link to the at least one audio emission means (2), exchanging an information with the at least one audio emission means (2), determining a position of the at least one audio emission means (2) in relation to the vehicle (3), determining the at least one triggering event based upon the position determined of the at least one audio emission means (2), managing the emission of the sound based upon the at least one triggering event determined and the sound signal generated, such that the emission of the sound is by means of the at least one audio emission means (2) and/or by the first sound system (31).

It permits realising the transmission of information in an efficient and rapid manner such that there exist no redundancies, for example that the same information is listened to by means of two different devices, there being the possibility of phase lags.

## Description

The present invention relates to a procedure for the management of an emission of a sound for a vehicle permitting the interaction between a mobile electronic device, an audio emission means and a sound system of the vehicle.

### Background of the invention

In present day society the use is increasingly more habitual of mobile devices, such as mobile telephones and tablets for recreational uses, such as listening to music or listening to the radio and similar uses, for example by means of head phones, said head phones being connected to a mobile device by wireless connection or by cable.

In addition, the connection is also habitual of these mobile devices to vehicles for the transfer of information between both thereof. In this manner, a link between a mobile device and a vehicle permits the control and management by means of the vehicle of functions such as making calls, reproduction of music, display of images... the number of functions controllable by means of the vehicle is increasingly high.

For example, the document KR20120128017 describes a connection by means of Bluetooth® between a mobile telephone and a portable loudspeaker within an automobile, the document WO2007102651 describes the connection between three devices, for example the connectivity between a mobile, a head phone, and an external audio device. In this case, the mobile telephone is placed in contact by means of Bluetooth® with one of the devices, by means of a selection unit.

However, these documents do not describe the management of the emission of the sound in a coordinated manner when the mobile device is within or outside the vehicle.

Consequently, the problem it is desired that the present invention solve is the transmission of information between different devices by means of different channels of communication. It is intended that the transmission of information be realized in an efficient and rapid manner, as well as in a simultaneous manner such that no redundancies exist (for example the same information being listened to by means of two different devices, there being the possibility of phase lags). In addition, having the objective of not producing distractions for the driver the automation of this process is desired.

Another object of the present invention is that a mobile element within the vehicle may adjust certain functions of the vehicle, such as the volume, the radio transmitter, etc, including from the rear seats of the vehicle.

### Description of the invention

Through the procedure for the management of the present invention the solution of the inconveniences cited is achieved, presenting other advantages described below.

The procedure for the management of an emission of a sound for a vehicle of the present invention, wherein the vehicle comprises a first sound system and at least a first control unit, wherein the vehicle is capable of being connected to at least one mobile electronic device, wherein the at least one mobile electronic device comprises at least a second control unit, wherein the at least one first control unit and the at least one second control unit are in communication such that a sound signal generated is unified, that is to say synchronized, between the vehicle and the at least one mobile electronic device, wherein the procedure for the management comprises the stages of:
- establishing a link to at least the one audio emission means, wherein the at least one audio emission means is portable,
- exchanging an information with the at least one audio emission means,
- determining a position of the at least one audio emission means in relation to the vehicle,
- determining at least one triggering event based upon the position determined of the at least one audio emission means,
- managing the emission of the sound based upon said at least one triggering event determined and the sound signal generated, such that the emission of the sound is by means of the at least one audio emission means and/or by the first sound system.

In this way, the vehicle and mobile electronic device are in communication by means of the respective control units thereof having the objective of there existing a single sound signal, wherein said sound signal is reproduced by the at least one audio emission means and/or by the first sound system. Consequently, the emission of the sound would be the acoustic signal emitted by one of the audio emission means, for example a portable external loudspeaker or head phones, and/or the sound system of the vehicle, for example the system of loudspeakers within the interior of the vehicle.

In this manner, the sound signal generated emits the commands that the emission of the sound be produced, giving the command of what it is that it is desired be listened to, for example radio, a multimedia device, etc.

It must be stated that in the present description and in the claims unified sound signal is understood to mean synchronized sound signal, that is to say that a single sound signal is generated and transmitted and not different sound signals, especially relevant within the interior of the vehicle having the objective of preventing redundancies or distractions. Consequently, there exists a prior stage of prioritising a single sound signal generated from among a plurality of sound signals. For example, the vehicle reproduces a sound signal corresponding to a radio transmitter by the first sound system. In addition, a mobile electronic device reproduces a sound signal corresponding to a playlist stored in the second control unit. Of the two sound signals, on the mobile electronic device entering into the interior of the vehicle, one thereof is prioritized such that it is transmitted and emitted by the sound systems selected. In all cases a single generated sound signal will be emitted.

It must also be stated that the vehicle is capable of being connected to at least one mobile electronic device, for example a smart telephone, always provided that the vehicle and the mobile electronic device are sufficiently within the range to establish a communication.

Additionally, the at least one audio emission means not belonging either to the vehicle or to the mobile electronic device participates in the emission of the sound such that the signal emitted must be managed in an efficient manner as set out in the present invention. According to a preferred embodiment, the audio emission means may be a loudspeaker, head phones, or, in general, any apparatus capable of emitting audio and also being transportable. Furthermore, the procedure of the present invention permits managing the reproduction of sound should there exist a plurality of audio emission means such as, for example, a portable loudspeaker and head phones.

Moreover, in the procedure for the management according to the present invention, the stage of establishing a link with the at least one audio emission means comprises preferentially the stages of:
- establishing a connection between the at least one audio emission means and the at least one mobile electronic device, and
- establishing a connection between the at least one mobile electronic device and the vehicle.

More specifically, the connection is established between the at least one audio emission means and the at least one second control unit, and between the at least one second control unit and the at least one first control unit. In this manner, the management of the emission of the sound is by means of the second control unit of the at least one mobile electronic device. It will consequently be the mobile electronic device which manages and transmits the commands both to the vehicle and to the audio emission means.

In the procedure for the management according to the present invention the stage establishing a link with the at least one audio emission means comprises, alternatively, establishing a connection between the at least one audio emission means and the vehicle.

More specifically, the connection may be established between the at least one audio emission means and the at least one first control unit. In this manner, the management of the emission of the sound is by means of the first control unit of the vehicle. It will consequently be the vehicle which manages and transmits the commands to the audio emission means, the vehicle may also be connected to the mobile electronic device.

Furthermore, the stage of exchanging an information with the at least one audio emission means may comprise transmitting the sound signal generated, for example based upon the link established to the at least one audio emission means. In this manner, if the link is direct to the vehicle, the sound signal generated originates directly from the vehicle. On the other hand, if the link is to the mobile electronic device, the sound signal generated originates from the mobile electronic device.

The stage of exchanging an information with the at least one audio emission means may preferentially comprise transmitting the at least one instruction, wherein the at least one instruction is generated by the at least one actuator, wherein the at least one audio emission means comprises the at least one actuator. These instructions may be transmitted to the vehicle directly or by means of the mobile electronic device. For example, the instruction may be: stop music, answer call, advance to the following track, raise or lower the volume, etc.

By actuator are understood, for example, physical, tactile, voice, etc, controls, to control the audio or other functions of the vehicle. Consequently, the at least one audio transmitter permits additionally the control of certain functions of the vehicle from any zone of the vehicle, being especially advantageous for the rear seats of the vehicle, or the enablement of other functions not controllable by means of the traditional controls incorporated by the vehicle. Although the at least one audio emission means is not emitting sound, it takes advantage of the link thereof having the objective of actuating upon and modifying functions of the vehicle.

For example, the actuator may be a tactile area in circular form used to select the tracks playing at that moment. This tactile zone could also be used to zoom a map, change the volume, play or scratch a track, etc.

Additionally, the stage of determining a position of the at least one audio emission means comprises determining a position of the at least one mobile electronic device in relation to the vehicle, that is say within the interior or exterior to the vehicle.

The stage of determining a position of the at least one mobile electronic device may also comprise establishing a connection between the at least one mobile electronic device and the vehicle such that, if the mobile electronic device and the vehicle are linked, it signifies that the mobile electronic device is within the vehicle, and if they are not linked it signifies that the mobile electronic device is outside.

In addition, the stage of determining a position of the at least one mobile electronic device may comprise the stages of:
- determining a location of the at least one mobile electronic device,
- determining a location of the vehicle, and
- comparing the location of the at least one mobile electronic device with the location of the vehicle.

The stage of determining the position may be realized, for example, by means of GPS devices belonging to each device, or triangulation of signals, etc.

The stage of determining at least one triggering event comprises preferentially determining a distancing of the position of the at least one audio emission means in relation to the vehicle based upon the position determined of the at least one mobile electronic device, and/or determining an approximation of the position of the at least one audio emission means in relation to the vehicle based upon the position determined of the at least one mobile electronic device.

Additionally, should the mobile electronic device be outside the vehicle, the stage of managing the emission of the sound may comprise the stages of:
- establishing a connection between the at least one mobile electronic device and the at least one audio emission means, if said connection did not previously exist, and
- enabling the emission of the sound by means of the at least one audio emission means, wherein the sound signal generated originates from the at least one second control unit of the at least one mobile electronic device.

In this manner, when the mobile electronic device and the audio emission means are within the interior of the vehicle and pass to the exterior of the vehicle, the emission of the sound is enabled by means of the audio emission means. There may consequently exist a prior stage of establishing a connection between both thereof and of unifying the sound signal of the vehicle to the mobile electronic device such that the same sound signal which was being reproduced within the interior of the vehicle continues to be reproduced within the exterior of the vehicle. As has been noted, unifying signifies transferring or prioritising a sound signal generated.

Moreover, should the mobile electronic device be within the vehicle, according to a first embodiment the stage of managing the emission of the sound comprises the stages of:
- disabling the emission of sound by means of the at least one audio emission means, and
- enabling the emission of sound by means of the at least one sound system of the vehicle.

Should the mobile electronic device be within the vehicle, according to a second embodiment, wherein a simultaneous emission is realized, the stage of managing the emission of the sound comprises the stages of:
- enabling the emission of sound by means of the at least one audio emission means, and
- enabling the emission of sound by means of the at least one first sound system of the vehicle.

In the procedure for the management according to the present invention, the connection is established by wireless means and/or by physical means. For example, it may be realized by means of cable, Bluetooth®, or 3G/4G, or by means of any type of suitable connection.

Furthermore, the mobile electronic device may be a mobile telephone, a tablet, or other communication device.

### Brief description of the drawings

For the better understanding of that set out drawings are attached wherein, schematically and solely in terms of a non-limitative example, a practical case of embodiment is shown.

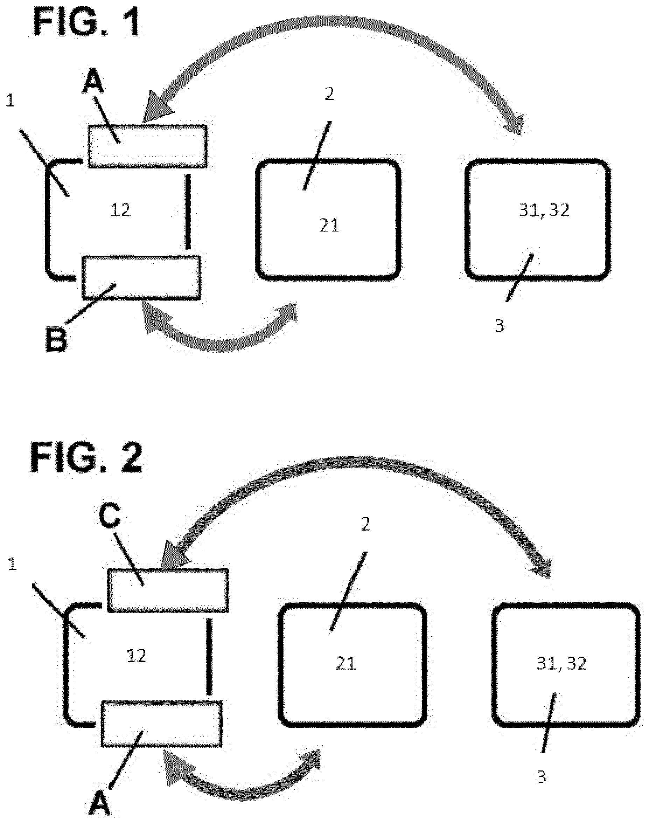

Figures 1 to 4 are block diagrams showing different forms of connection occurring in the procedure for the management according to the present invention.

### Description of a preferred embodiment

In the first place, the components utilized in the procedure for the management according to the present invention will be described.

In the procedure for the management according to the present invention there are involved:
- a mobile electronic device, indicated by means of the reference number 1, which may preferentially be a mobile telephone, a tablet, a portable computer, or similar, and comprises a control unit identified by the reference number 12;
- a portable audio emission means, identified by the reference number 2, which may be a loudspeaker, headphones, or similar, comprising an actuator 21, which may be physical or tactile controls, for example buttons, a voice control system, or similar, to control audio functions or other types of function, both of the vehicle 3 and of the mobile electronic device 1; and
- a vehicle, for example an automobile, identified by the reference number 3, comprising a first sound system 31, for example a multimedia system comprising at least a radio and a sound reproducer, and a control unit 32, which may be one of the electronic components of the vehicle 3 itself.

These components may be connected one to another in any suitable manner, for example by cable (indicated by the letter A in the figures), Bluetooth® (indicated by the letter B in the figures), and/or 3G/4G/5G (indicated by the letter C in the figures). Any known type of cable connection or wireless connection may be valid for transmitting information between the aforestated components.

Figure 1 shows a first manner of connection or of use of the aforedescribed audio system by means of the procedure for the management according to the present invention.

In this case, the mobile electronic device 1 is connected to the audio emission means 2 by means of Bluetooth® (B). When the user enters into the vehicle 3 with the mobile electronic device 1 thereof and the audio emission means 2 thereof, the mobile electronic device 1 is connected to the vehicle 3 by means of a cable (A).

Upon detecting said connection, the second control unit 12, for example by means of a suitable application, sends a signal to the audio emission means 2 such that within the vehicle 3 it does not emit sound but that it may act as a control panel for different instructions within the vehicle 3 (for example change track, change volume, act upon the GPS, etc). These instructions will be transmitted from the audio emission means 2 to the mobile electronic device 1, and from the mobile electronic device 1 to the vehicle 3.

Furthermore, the sound proceeding from the mobile electronic device 1 may be emitted by the first sound system 31 of the vehicle 3, this being determined by means of the first control unit 32.

Figure 2 shows another mode of connection.

In this case, the mobile electronic device 1 is connected to the audio emission means 2 by means of a cable (A), although it could also be connected by means of Bluetooth® (B), as in the foregoing case. Upon entering into the vehicle 3, the mobile electronic device 1 is connected by means of 3G/4G or Wi-Fi (C) to the vehicle 3.

As in the foregoing case, the control unit 12 of the mobile electronic device 1, for example by means of an application, sends a signal to the audio emission means 2 such that sound be not emitted within the vehicle.

Also in this case, the audio emission means 2 may act as a control panel for different instructions within the vehicle 3 (for example, change track, change volume, act upon the GPS, etc). These instructions will be transmitted from the audio emission means 2 to the mobile electronic device 1, and from the mobile electronic device 1 to the vehicle 3.

Additionally, the sound proceeding from the mobile electronic device 1 may be emitted by the first sound system 31 of the vehicle 3, it being unified between the first control unit 32 and the second control unit 12. In this manner a single sound signal is generated within the interior of the vehicle 3 and according to the preferences of the user.

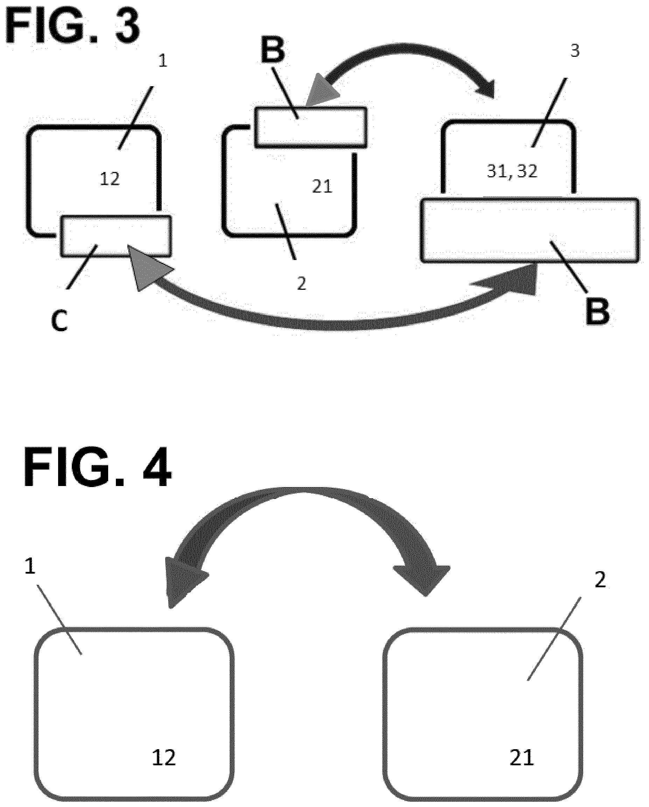

Figure 3 shows a third mode of connection.

In this case, by means of Bluetooth® (B) the audio emission means 2 is connected to the vehicle 3 in the same manner as the mobile electronic device 1 also connected by means of Bluetooth® (B). This permits a connection between the mobile electronic device 1, the audio emission means 2, and the sound system 31 of the vehicle, and facilitates the use of any device in an independent manner or interacting between the same. In this mode of connection, and differing from the two previous modes, the intelligence is located in the first control unit 32 of the vehicle 3 which receives the information exchanged both with the mobile electronic device 1 and with the audio emission means 2. By intelligence it is understood that the vehicle 3 manages and transmits the orders both to the mobile electronic device 1 and to the audio emission means 2.

Finally, figure 4 shows solely the mobile electronic device 1 and the audio emission means 2 connected to one another, for example by means of Bluetooth® or cable, by virtue of the fact that it is when the mobile electronic device 1 is outside the vehicle 3 and is not connected to the same.

As a consequence, in the procedure according to the invention, firstly a link is established to the audio emission means 2, whether establishing a connection between the audio emission means 2 and the mobile electronic device 1, the intelligence then being in the second control unit 12 of the mobile electronic device 1, or alternatively establishing a connection between the mobile electronic device 1 and the vehicle 3, and/or establishing a connection between the audio emission means 2 and the vehicle 3, the intelligence then being in the first control unit 32 of the vehicle 3.

Subsequently, information is exchanged with the audio emission means 2, such as transmitting the sound signal generated, or transmitting at least an instruction generated by the actuator 21 of the audio emission means 2.

Then, a position is determined of the audio emission means 2 in relation to the vehicle 3, and a position is determined of the mobile electronic device 1 in relation to the vehicle 3, establishing a connection between the mobile electronic device 1 and the vehicle 3, and/or alternatively a location of the mobile electronic device 1 and a location of the vehicle 3 is determined, and said location of the mobile electronic device 1 is compared to said location of the vehicle 3.

Based upon the position determined of the audio emission means 2, a triggering event is determined consisting in identifying a change in the connections established between the components. In this manner, a triggering event consists of determining a distancing of the position of the audio means 2 in relation to the vehicle 3 based upon the position determined of the mobile electronic device 1, or determining an approximation of the position of the audio emission means 2 in relation to the vehicle 3 based upon the position determined of the mobile electronic device 1.

Subsequently, the emission of the sound is managed based upon the triggering event determined and upon the sound signal generated, such that the emission of the sound is by means of the audio emission means 2 and/or by the first sound system 31.

In this management, if a triggering event consists in a distancing of the at least one audio emission means 2 in relation to the vehicle 3, a connection is established between the mobile electronic device 1 and the audio emission means 2, should it not exist previously, and the emission of the sound is enabled by means of the audio emission means 2, wherein the sound signal generated originates from the second control unit 12 of the mobile electronic device 1. In this manner, a generated and unified sound signal is emitted by the audio emission means 2 such that the user may listen to a sound signal without interruptions nor changes in the displacement thereof on leaving the vehicle 3.

In this management the emission of sound by means of the audio emission means 2 is also disabled, and the emission of sound by means of the sound system 31 of the vehicle 3 is enabled. In this manner, the generated and unified sound signal is emitted by means of the first sound system 31 such that the user may listen to a sound signal without interruptions nor changes in the movement thereof on entering into the vehicle 3. Disabling the sound signal by means of the audio emission means 2 is especially advantageous when alterations in the emission of sound within the interior of the vehicle 3 are not desired, especially when the audio emission means 2 comprises a sound quality which is not particularly good.

Alternatively, the management also enables the emission of sound by means of the audio emission means 2 and enables the emission of sound by means of the sound system 31 of the vehicle 3. In this manner, a generated and unified sound signal is emitted by means of the first sound system 31 and by means of the audio emission means 2 such that the user may listen to a sound signal without interruptions or changes in the movement thereof on entering into the vehicle 3. Enabling the emission of sound by means of the audio emission means 2 is especially advantageous in order to dispose of additional points of reproduction of sound within the interior of the vehicle 3, in this manner being able to increase the capabilities of the first sound system 31.

Consequently, the procedure for the management of the emission of sound of the present invention permits adjusting the channel of reproduction of the sound signal according to the location of the user, whether interior or exterior to the vehicle 3, in addition to managing said reproduction of the sound signal in the transitions from the interior of the vehicle 3 to the exterior, or from the exterior of the vehicle 3 to the interior thereof. Thus the most advantageous channels of emission of sound are selected when there exists a portable or transportable audio emission means 2 which may additionally transmit instructions to govern certain functions of the vehicle 3.

In spite of reference having been made to a specific embodiment of the invention, it is evident to a person skilled in the art that the procedure described is capable of numerous variations and modifications and that all the details mentioned may be substituted by others being technically equivalent without departing from the scope of protection defined by the attached claims.

## Claims

1. Procedure for the management of an emission of a sound for a vehicle (3), wherein the vehicle (3) comprises a first sound system (31) and at least a first control unit (32), wherein the vehicle (3) is capable of being connected to at least one mobile electronic device (1), wherein the at least one mobile electronic device (1) comprises at least a second control unit (12), wherein the at least one first control unit (32) and the at least one second control unit (12) are in communication, such that a sound signal generated is unified between the vehicle (3) and at least one mobile electronic device (1), and wherein the procedure for the management comprises the stages of:
- establishing a link to at least one audio emission means (2), wherein the at least one audio emission means (2) is portable,
- exchanging an information with the at least one audio emission means (2),
- determining a position of the at least one audio emission means (2) in relation to the vehicle (3),
- determining at least one triggering event based upon the position determined of the at least one audio emission means (2),
- managing the emission of the sound based upon the at least one triggering event determined and the sound signal generated, such that the emission of the sound is by means of the at least one audio emission means (2) and/or by the first sound system (31).

2. Procedure for the management according to Claim 1, **characterized in that** the stage of establishing a link to the at least one audio emission means (2) comprises the stages of:
- establishing a connection between the at least one audio emission means (2) and the at least one mobile electronic device (1), and
- establishing a connection between the at least one mobile electronic device (1) and the vehicle (3).

3. Procedure for the management according to Claim 1, **characterized in that** the stage of establishing a link to the at least one audio emission means (2) comprises establishing a connection between the at least one audio emission means (2) and the vehicle (3).

4. Procedure for the management according to Claim 1, **characterized in that** the stage of exchanging an information with the at least one audio emission means (2) comprises transmitting the sound signal generated.

5. Procedure for the management according to Claim 1, **characterized in that** the stage of exchanging an information with the at least one audio emission means (2) comprises transmitting the at least one instruction, wherein the at least one instruction is generated by at least one actuator (21), wherein the at least one audio emission means (2) comprises the at least one actuator (21).

6. Procedure for the management according to Claim 1, **characterized in that** the stage of determining a position of the at least one audio emission means (2) comprises determining a position of the at least one mobile electronic device (1) in relation to the vehicle (3).

7. Procedure for the management according to Claim 6, **characterized in that** the stage of determining a position of the at least one mobile electronic device (1) comprises establishing a connection between the at least one mobile electronic device (1) and the vehicle (3).

8. Procedure for the management according to Claim 6, **characterized in that** the stage of determining a position of the at least one mobile electronic device (1) comprises the stages of:
- determining a location of the at least one mobile electronic device (1),
- determining a location of the vehicle (3), and
- comparing the location of the at least one mobile electronic device (1) to the location of the vehicle (3).

9. Procedure for the management according to Claim 6, **characterized in that** the stage of determining the at least one triggering event comprises determining a distancing of the position of the at least one audio emission means (2) in relation to the vehicle (3) based upon the position determined of the at least one mobile electronic device (1).

10. Procedure for the management according to Claim 6, **characterized in that** the stage of determining at least one triggering event comprises determining an approximation of the position of the at least one audio emission means (2) in relation to the vehicle (3) based upon the position determined of the at least one mobile electronic device (1).

11. Procedure for the management according to Claim 9, **characterized in that** the stage of managing the emission of the sound comprises the stages of:
- establishing a connection between the at least one mobile electronic device (1) and the at least one audio emission means (2), and
- enabling the emission of the sound by means of the at least one audio emission means (2), wherein the sound signal generated originates from the at least one second control unit (12) of the at least one mobile electronic device (1).

12. Procedure for the management according to Claim 10, **characterized in that** the stage of managing the emission of the sound comprises the stages of:
- disabling the emission of sound by means of the at least one audio emission means (2), and
- enabling the emission of sound by means of the at least one first sound system (31) of the vehicle (3).

13. Procedure for the management according to Claim 10, **characterized in that** the stage of managing the emission of the sound comprises the stages of:
- enabling the emission of sound by means of the at least one audio emission means (2), and
- enabling the emission of sound by means of the at least one first sound system (31) of the vehicle (3).

14. Procedure for the management according to one of the foregoing claims, **characterized in that** establishing a connection comprises wireless means and/or through physical means.
